# EUROPEAN PATENT APPLICATION

(11) **EP 0 953 284 A1**
(43) Date of publication of application: **03.11.1999**
(21) Application number: 99103320.0
(22) Date of filing: 19.02.1999
(51) Int. Cl.: A01N 37/34

(54) **Biocide with accelerated dissolution**

(30) Priority: 24.04.1998 US 67777
(71) Applicant: CLEARWATER, INC., Pittsburgh, PA 15225 (US)
(72) Inventor: Smith, Kevin W., McMurray, PA 15317 (US)
(74) Representative: Grünecker, Kinkeldey, Stockmair & Schwanhäusser Anwaltssozietät

(57) **Abstract**

The biocide 2,2-dibromo-2-nitrilopropionamide is readily dispersed in aqueous media such as oilfield fracturing media by combining it in tablet form with effervescing ingredients such as sodium bicarbonate and citric acid.

## Description

### Technical Field

This invention relates to biocides used in hydrocarbon production from subterranean formations. In particular it relates to a formulation for enhancing the solution rate of 2, 2-dibromo-2-nitrilopropionamide.

### Background of the Invention

2,2-dibromo-2-nitrilopropionamide (hereafter "DBNPA") is a known biocide useful for controlling microorganisms which tend to metabolize guar and other gel-forming materials used in aqueous fracturing fluids. The bacteria may also cause corrosion of equipment for recovering hydrocarbons in remote subterranean formations.

DBNPA is slow to dissolve, however, in many practical field situations. Its normal solubility in water is about 1.5%. Because its rate of solution is slow, it has been prepared as a powder or used in other small particulate form rather than pellets, to expose more surface area to the available water, but this approach is not always successful. Frequently the DBNPA is simply added to a tank or large vessel of water in the field where there is no convenient way to agitate it, and accordingly the user must rely on the unaided solution rate to dissolve the material. Even a finely divided powder resists dissolving in a useful period of time in a quiescent container of water.

A better method of dissolving DBNPA is needed for use in locations not having convenient agitation apparatus.

### Summary of the Invention

I have invented a composition and method for enhancing the dissolution of 2,2-dibromo-2-nitrilopropionamide (hereafter "DBNPA"). The composition includes a major portion of DBNPA, and smaller portions of sodium bicarbonate and citric acid, with an optional amount of borax. This composition will tend to generate carbon dioxide when it is exposed to water, causing its own agitation or physical movement in the water. Not only is a high percentage of the DBNPA exposed to the water quickly by the dissolution of the other ingredients, but it is physically exposed to more water by movement through the water caused by the effervescence of the gas generation. The material accordingly dissolves quickly and efficiently

More broadly, my invention comprises a composition for delivering the biocide DBNPA to an oilfield fracturing fluid comprising, in tablet form, DBNPA and an amount of effervescent ingredients effective to cause agitation and breakup of the tablet on contact with water. My method comprises dispersing DBNPA in water and/or an aqueous medium such as a fracturing fluid containing water by combining it with effervescing agents and placing it in the water or fracturing fluid together with the effervescing agents, in the form of a tablet.

Compressing the ingredients in the form of a tablet makes the composite dense, so that the tablet will sink in a quiescent liquid. For example, a stock tank near a well may have in it both oil and water, which rests quietly in the lower portions of the tank. The pellet or tablet will readily pass through the oil and begin effervescing on contact with theotherwise still water, providing its own motion and enhanced contact with the water; it is thus able to disperse the biocide where it is needed -- in the lower regions of the tank.

Likewise the tablet will be able to sink to the "ratholes" and other relatively inaccessible areas of wells. The tablets are also useful in the quiescent water often found in fracturing fluid tanks and similar applications in the oilfield where fresh water is pumped into a reservoir. Frequently such fluids are mixed with organic gel-forming agents such as polysaccharides, which are readily metabolized by bacteria.

### Detailed Description of the Invention

A specific formulation found to be successful is, by weight, 49% DBNPA (100 tech), 21% sodium bicarbonate, 20% citric acid, and 10% borax. This is the presently preferred composition, but it may be varied as follows: (by weight) DBNPA: 35-65%; Na₂(CO₃): 15-28%; citric acid: 15-27%; borax: 0-20%.

### Example 1

A tablet weighing about 22g and made of the above preferred formulation was dropped into a jug of tap water at 58°F having a column height of 14 inches. The tablet fell to the bottom of the container immediately and effervesced within seconds. A trace of snow-like particles dispersed in the water was observed within about two minutes; these were assumed to be active DBNPA released as a result of the effervescing. The tablet entirely disintegrated within about thirty minutes, leaving a small pile of particles, which appeared smaller within another twelve hours.

The effervescence of the tablet was believed to have caused minor turbulence of the water in the vicinity of the tablet, which in turn caused the dispersion of the particles throughout the water.

### Example 2

A tablet similar to that of Example 1 was dropped into a 4 liter beaker containing three-quarters of an inch of water; then additional water was added slowly to the beaker, in simulation of an oilfield fracturing fluid tank. Observations of the dispersed material were similar to those of Example 1.

### Example 3

Tablets similar to those used in Examples 1 and 2 were added to equal quantities of tap water, sea water, and a saturated solution of sodium chloride. The tablet effervesced and dissolved rapidly in the water and the sea water, but was somewhat weaker in effervescence and slower in dissolution in the brine.

My invention is not limited to the specific effervescing agents mentioned herein. Any combination of effervescing agents which will cause an evolution of gas is satisfactory; those which are more vigorous are preferred. The amount should be effective to cause agitation and breakup of the tablet on contact with water.

## Claims

1. Composition for delivering the biocide 2,2-dibromo-2-nitrilopropionamide to an oilfield fracturing fluid comprising, in tablet form, 2,2-dibromo-2-nitrilopropionamide and an amount of effervescent ingredients effective to cause agitation and breakup of the tablet on contact with water.

2. Composition of claim 1 comprising about 35-65% 2,2-dibromo-2-nitrilopropionamide, about 15-28% Na₂(CO₃), about 15-27% citric acid, and up to about 20% borax.

3. Method of dissolving 2,2-dibromo-2-nitrilopropionamide in an aqueous medium comprising combining said 2,2-dibromo-2-nitrilopropionamide with effervescing agents in the form of a tablet and adding said tablet to said aqueous medium.

4. Method of claim 3 wherein said effervescing agents include sodium bicarbonate and citric acid.
